# EUROPEAN PATENT APPLICATION

(11) **EP 4 428 756 A1**
(43) Date of publication of application: **11.09.2024**
(21) Application number: 23210302.8
(22) Date of filing: 16.11.2023
(51) Int. Cl.: G06N 3/0464, G06N 3/063

(54) **METHOD AND APPARATUS WITH NEURAL NETWORK EXECUTION**

(30) Priority: 07.03.2023 KR 20230029932
(71) Applicant: Samsung Electronics Co., Ltd., Suwon-si, Gyeonggi-do 16677 (KR)
(72) Inventor: KANG, Jonghoon, 16678 Suwon-si (KR); KANG, Donghyun, 16678 Suwon-si (KR)
(74) Representative: Arnold & Siedsma

(57) **Abstract**

A processor-implemented method includes: determining an operation sequence of a neural network based on dependency information of a tile constituting a feature map of the neural network and layer information of the neural network; and generating a first command for controlling a feature map memory and a second command for controlling an operator based on the operation sequence, wherein the first command comprises information on a tile input to each of a plurality of memory queues constituting the feature map memory.

## Description

### BACKGROUND

### 1. Field

The following description relates to a method and apparatus with neural network execution.

### 2. Description of Related Art

In a neural network, nodes may be connected to each other and may be collectively operated to process complex input data. For example, different types of neural networks may include a convolutional neural network (CNN), a recurrent neural network (RNN), a deep belief network, restricted Boltzmann machine, and the like but are not limited thereto. In a feed-forward neural network, nodes of the neural network may have links with other nodes. Such links may expand only in one direction, for example, a forward direction, through the neural network.

The neural network may be used to extract "features" from complex input data. The neural network may include a plurality of layers. Each layer may receive input data and may generate output data by processing the input data of the corresponding layer. The output data may be a feature map of input data generated as the neural network convolutes an input image or a feature map with convolution kernels. Initial layers of the neural network, such as convolutional layers, may be operated to extract low level features, such as edges or gradients, from an input, such as an image. The initial layers of the neural network may be referred to as feature extraction layers. Subsequent layers corresponding to feature classification layers of the neural network may progressively extract or detect more complex features, such as an eye or a nose. The feature classification layer may be referred to as "fully-connected layers".

On the other hand, an external memory may be used to store a large volume of intermediate result data generated while the neural network is executed. In addition, the external memory may be used to store multiple weights used by the feature classification layers.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one or more general aspects, a processor-implemented method includes: determining an operation sequence of a neural network based on dependency information of a tile constituting a feature map of the neural network and layer information of the neural network; and generating a first command for controlling a feature map memory and a second command for controlling an operator based on the operation sequence, wherein the first command comprises information on a tile input to each of a plurality of memory queues constituting the feature map memory.

The dependency information of the tile may include information on another tile that is used to perform an operation on a predetermined tile and may include an overlap region.

The second command may include information on a tile comprised in a memory queue that is a target of an operation among the plurality of memory queues for the operator.

The memory queues may be separated and constituted based on a layer of the neural network.

Each of the plurality of memory queues may be constituted in a plurality of memory banks stored in a unit of tiles.

A tile constituting the feature map of the neural network may be generated by dividing the feature map in a single direction.

In response to a bit width in a first direction of the feature map being greater than a bit width of the memory bank, a bit width of the tile may be determined based on the bit width of the memory bank.

The feature map memory may include static random access memory (SRAM).

In one or more general aspects, a processor-implemented method includes: obtaining information of a tile constituting a feature map of a neural network; determining an operation sequence of the neural network based on the information of the tile; determining a first tile to be stored in a feature map memory based on the operation sequence; storing the first tile and a second tile that is used to perform an operation on the first tile and may include an overlap region in a first memory queue of the feature map memory; performing an operation on the first tile based on the first tile and the second tile; and storing an operation result in a second memory queue of the feature map memory.

The determining of the operation sequence may include determining the operation sequence based on dependency information of the tile.

The information of the tile may be determined based on a shared boundary area of a tile constituting the feature map.

In one or more general aspects, a non-transitory computer-readable storage medium stores instructions that, when executed by a processor, configure the processor to perform any one, any combination, or all of operations and/or methods described herein.

In one or more general aspects, an apparatus includes: a memory; an operator; and a scheduler configured to: determine an operation sequence of a neural network based on dependency information of a tile constituting a feature map of the neural network and layer information of the neural network; and generate a first command for controlling the memory and a second command for controlling the operator based on the operation sequence, wherein the first command may include information on a tile input to each of a plurality of memory queues constituting the memory.

The dependency information of the tile may include information on another tile that is used to perform an operation on a predetermined tile and may include an overlap region.

The second command may include information on a first tile comprised in a first memory queue that is a target of an operation among the plurality of memory queues for the operator.

The operator may be configured to generate a second tile by processing the first tile based on the second command, and the memory may be configured to store the second tile in a second memory queue.

The memory queues may be separated and constituted based on a layer of the neural network.

Each of the plurality of memory queues may be constituted in a plurality of memory banks stored in a unit of tiles.

A tile constituting the feature map of the neural network may be generated by dividing the feature map in a single direction.

In response to a bit width in a first direction of the feature map being greater than a bit width of the memory bank, a bit width of the tile may be determined based on the bit width of the memory bank.

Other features and aspects will be apparent from the following detailed description, the drawings, and the claims.

### BRIEF DESCRIPTION OF THE DRAWINGS

FIG. 1A illustrates an example of processing by a plurality of layers of a neural network.
FIG. 1B illustrates an example of a tiling method.
FIG. 2 illustrates an example of processing performed by a neural network engine.
FIG. 3 illustrates an example of an operation of a feature map memory.
FIG. 4A illustrates an example of a tiling method through a scheduler.
FIG. 4B illustrates an example of a neural network operation.
FIG. 5 illustrates an example of a tiling method.
FIG. 6 illustrating an example of a scheduling method.
FIG. 7 illustrates an example of a neural network operation method.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

Although terms, such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Throughout the specification, when a component or element is described as being "connected to," "coupled to," or "joined to" another component or element, it may be directly (e.g., in contact with the other component or element) "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning. The use of the term "may" herein with respect to an example or embodiment, e.g., as to what an example or embodiment may include or implement, means that at least one example or embodiment exists where such a feature is included or implemented, while all examples are not limited thereto.

Unless otherwise defined, all terms used herein including technical or scientific terms have the same meaning as commonly understood by one of ordinary skill in the art to which the present disclosure pertains and based on an understanding of the disclosure of the present application. It will be further understood that terms, such as those defined in commonly-used dictionaries, should be interpreted as having a meaning that is consistent with their meaning in the context of the relevant art and the present disclosure, and will not be interpreted in an idealized or overly formal sense unless expressly so defined herein.

The examples may be implemented as various types of products, such as, for example, a personal computer (PC), a laptop computer, a tablet computer, a smart phone, a television (TV), a smart home appliance, an intelligent vehicle, a kiosk, and a wearable device. Hereinafter, examples will be described in detail with reference to the accompanying drawings. In the drawings, like reference numerals are used for like elements.

Hereinafter, embodiments relate to neural networks. More particularly, one or more embodiments relate to reducing memory access of a neural network and consumption of an internal network bandwidth during execution. A method and system for executing a neural network are provided.

Convolution neural networks may be used for various applications, such as object recognition on an image, image reconstruction, semantic segmentation, scene recognition, and the like. Object recognition may refer to image processing for detecting or recognizing a predetermined object, such as a cat, a vehicle, and/or a chair, in an image. Image reconstruction may refer to image processing that attempts to correct an image. An example of image reconstruction may include sharpening of a blurry image. Semantic segmentation may refer to image processing for labeling a portion of an image. Scene recognition may refer to image processing for determining a predetermined scene, such as an office, a bedroom, and/or a playground, expressed in an image. Other than visual examples, various application domains to which similar neural networks are efficiently applied may exist.

While neural networks may achieve remarkable accuracy, a neural network may be compute-intensive. For example, a neural network may perform multiple operations on an image, may use multiple weights, and may generate multiple intermediate result traffic. A typical neural network may perform giga-operation per second (GOPS) on each image, may use about hundreds of millions to hundreds of billions of weights, and may generate hundreds of gigabytes of intermediate result data. In various implementations, a weight and intermediate result data traffic may have a high cost in an aspect of power efficiency. As the computational efficiency of the neural network increases, traffic may occupy a greater proportion in power consumed to execute the neural network, and thus, a limitation may be imposed on the use of the neural network in a mobile device, an application, or a computing environment with limited power. Accordingly, a method and apparatus of one or more embodiments may easily implement neural networks and a neural network-based application in a mobile device.

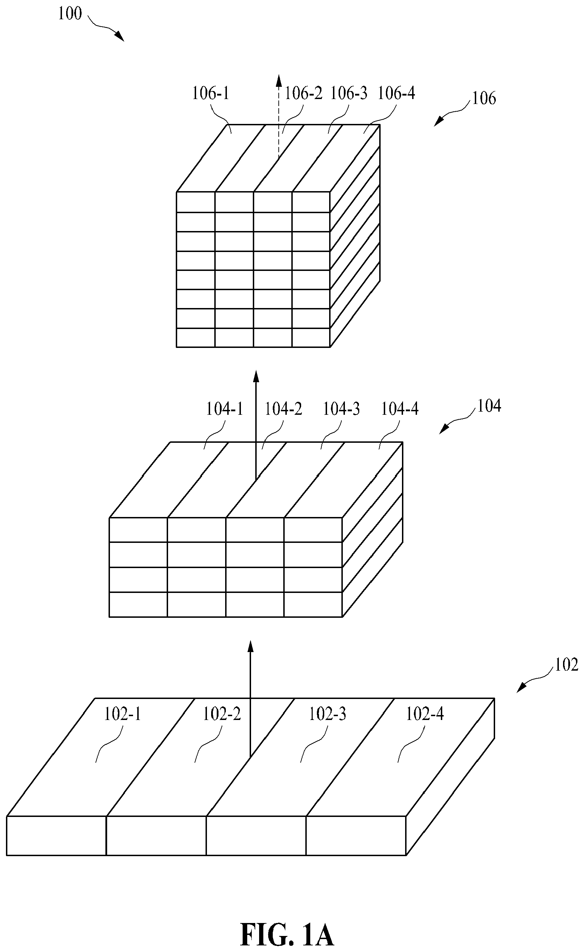

FIG. 1A illustrates an example of processing by a plurality of layers of a neural network. Referring to FIG. 1A, illustrated is an input 102 and a plurality of feature map sets 104 and 106. For example, the input 102 may be an image to be processed through a neural network 100. A "feature map set" may refer to a set of feature maps and may be, for example, data. The feature map set may be received as an input, may be processed by a layer of a neural network, and may be generated as an output of the layer of the neural network. According to one embodiment, the feature map sets 104 and 106 may be generated by convolutional layers or feature extracting layers of the neural network 100.

A layer of the neural network 100 may map outputs with respect to inputs. In the case of a convolution neural network, for example, mapping by a layer may be executed as convolutional kernels to be applied to input data, such as a predetermined feature map or an image for generating subsequent feature maps as an output of the layer. Referring to FIG. 1A, during forward direction execution, a layer of the neural network 100 may receive the input 102 and may generate the feature map set 104 as an output. During forward direction execution, a subsequent layer of the neural network 100 may receive the feature map set 104 as an input and may generate the feature map set 106 as an output. During forward direction execution, another subsequent layer of the neural network 100 may receive the feature map set 106 as an input and may generate a subsequent feature map as an output. Accordingly, during forward direction execution, a data flow may stream up from the input 102 to the feature map set 104 and the feature map set 106. Layers of the neural network 100 receiving and generating the feature map sets 104 and 106 may be hidden layers (e.g., hidden convolutional layers). Other neural network operations of the neural network 100 may be performed in addition to applying convolutional kernels configured to map input feature maps onto output feature maps. Examples of other neural network operations may include an application, such as an activation function, pooling, and resampling, but are not limited thereto.

In the example of FIG. 1A, the feature map set 104 may include four feature maps 104-1, 104-2, 104-3, and 104-4. The feature map sets 106 may include four feature maps 106-1, 106-2, 106-3, and 106-4. However, the number of each of the feature map sets 104 and 106 illustrated in FIG. 1A is only for ease of description, and the embodiment is not limited to a predetermined number of feature maps in the feature map sets of the neural network 100 or a predetermined number of layers in the neural network 100.

The "intermediate data" may refer to data of feature maps generated by hidden convolutional layers of the neural network 100, for example, a layer 1 to a layer N-1. A neural network (NN) engine (hereinafter, also referred to as an apparatus with neural network execution) may generate intermediate data by executing a neural network, such as the neural network 100.

In the case of a neural processor used in a mobile system-on-chip (SoC), the amount of data read and written by an external memory (e.g., dynamic random access memory (DRAM)) may be directly related to power consumption. Accordingly, reducing the amount of read and written data by accessing the external memory may be important to reduce power consumption. In addition, data processing in the neural processor may be characterized in that output data is mainly generated by processing input data and the output data is used as another subsequent input data. Due to this, the reusability of data that has been read once may increase due to an application characteristic.

Therefore, neural processors may have a predetermined size of an internal memory (e.g., a buffer) in hardware and the internal memory may read necessary data from the external memory and may store data that is processed and output again to use the stored data as subsequent input data.

As the size of internal memory increases, the reusability of data may increase. However, when the size of the buffer occupies 30% to 50% of the size of the neural processor, the total size of hardware may be affected. Accordingly, the size of internal memory may be maintained at a predetermined level and a tile may be used to effectively use the internal memory and accelerate an application. A tile may refer to cutting input data (e.g., the input 102 and the feature map sets 104 and 106) of a layer in the neural network into a predetermined size. An example of "executing a layer" and "processing data" using the layer of the neural network (e.g., using a device, such as a processor, a computing module, and a neural network) may include applying convolution kernels of the layer of the neural network to data that is provided as an input to a layer for generating an output feature map set. The data may be a different input, such as a feature map, a feature map set, or images. In this case, a portion of the neural network may be executed to process the tile. An example of "processing a tile" using a layer of a neural network may include applying, to a layer for generating an output tile, a subset of convolution kernels of a layer of a neural network corresponding to a tile that is provided as an input.

While processing the tile, overlapping may occur between adjacent tiles and this may require an additional computation to process the tile. Although a tile is processed to reduce power consumption, a power consumption problem may occur in a typical NN engine due to additional computational overhead. Accordingly, the NN engine of one or more embodiments may further reduce power consumption by reducing the additional computational overhead.

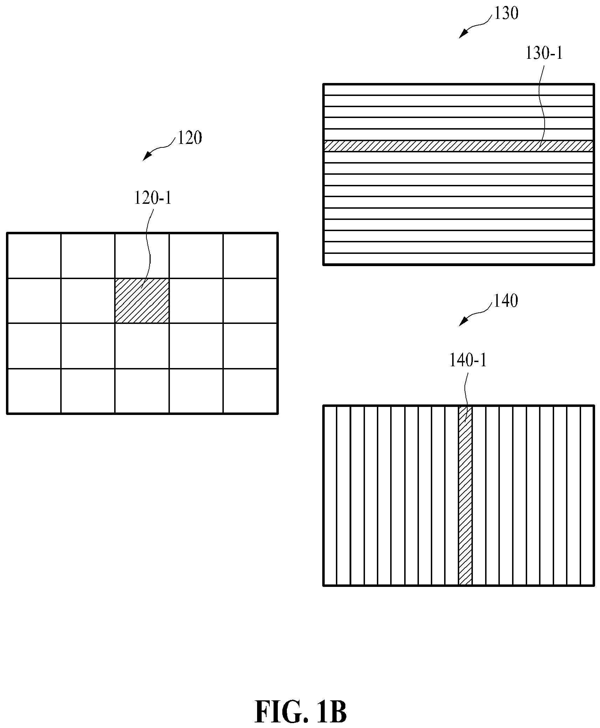

FIG. 1B illustrates an example of a tiling method.

Referring to FIG. 1B, an input 120 may be constituted by 20 tiles divided into 4 tiles in a first direction (e.g., a horizontal direction) and 5 tiles in a second direction (e.g., a vertical direction). In a typical tiling method, to process a tile 120-1 constituting the input 120, overlapping may occur in 8 tiles adjacent to the tile 120-1, and thus the typical tiling method may require an additional computation to process the tile 120-1.

In contrast, according to a tiling method of one or more embodiments, an input 130 may be constituted by tiles divided in the first direction. To process a tile 130-1 constituting the input 130, overlapping may occur only in 2 tiles adjacent to the tile 130-1. Similarly, an input 140 may be constituted by tiles divided in the second direction. To process a tile 140-1 constituting the input 140, overlapping may occur only in 2 tiles adjacent to the tile 140-1. Accordingly, the tiling method of one or more embodiments may process the tile 130-1 or the tile 140-1 using less computation than the typical tiling method processing the tile 120-1.

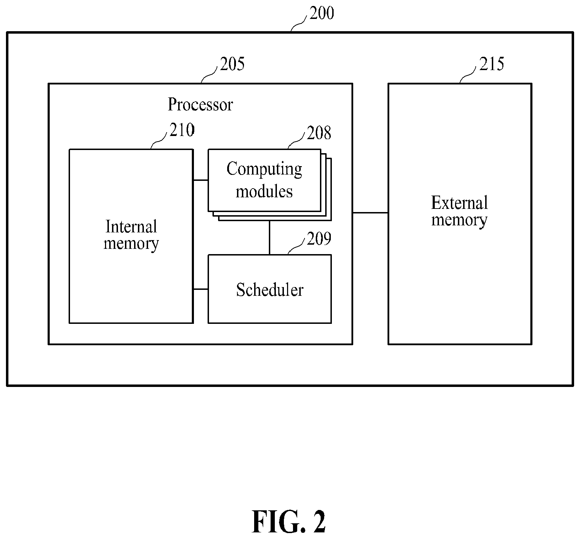

FIG. 2 illustrates an example of processing performed by an NN engine. Referring to FIG. 2, an NN engine 200 (e.g., an apparatus with neural network execution) may include a processor 205 (e.g., one or more processors) and an external memory 215 (e.g., one or more memories). The NN engine 200 may be, or be included in, a PC, a laptop computer, a tablet computer, a smart phone, a TV, a smart home appliance, an intelligent vehicle, a kiosk, and/or a wearable device, as non-limiting examples. The processor 205 may include computing modules 208. When the processor 205 includes the computing modules 208, the computing modules 208 may be implemented to be operated in parallel or simultaneously. Furthermore, the computing modules 208 may be independently operated. For example, each of the computing modules 208 may be implemented as a core configured to execute instructions. A computing module of one or more embodiments may be referred to as an operator or an operation unit.

The processor 205 may be implemented in hardware circuits. For example, the processor 205 may be implemented in an integrated circuit. The processor 205 may be implemented to execute commands, such as commands 225. The commands 225 may be included in program code. The processor 205 may be or include a neural processing unit (NPU), a hardware accelerator, a graphics processing unit (GPU), a central processing unit (CPU), a multi-core CPU, an array processor, a vector processor, a digital signal processor (DSP), a field-programmable gate array (FPGA), a programmable logic array (PLA), an application specific integrated circuit (ASIC), programmable logic circuitry, a controller, and the like. However, the example is not limited thereto. The NN engine 200 may any of various processors connected to the external memory 215.

The processor 205 may include an internal memory 210 (e.g., one or more memories). The internal memory 210 may be an on-die memory. For example, the internal memory 210 may be a cache memory of the processor 205. The internal memory 210 may be implemented in a simple buffer, a level-1 cache memory, a level-2 cache memory, or a different type of on-die memory of the processor 205. As illustrated, the computing modules 208 may be connected to the internal memory 210. When the processor 205 includes a plurality of computing modules 208, each of the computing modules 208 may include a dedicated internal memory 210. The internal memory 210 may include a feature map memory configured to store a portion of feature maps or feature maps as feature map data. The feature map memory may be implemented as static random access memory (SRAM).

The processor 205 may include a scheduler 209. The scheduler 209 may be mechanically or electronically implemented. For example, the scheduler 209 may be implemented in hardware circuits or may be implemented as a register configuration or hardware implementing an instruction by a sequence generated by software. The scheduler 209 may be connected to the internal memory 210, the computing modules 208, and a memory controller. The scheduler 209 may be a device for managing the internal memory 210 for a convolution operation and may be configured to transmit operations to the computing modules 208 and the memory controller in the order of dependency of data and a sequence rather than in the order of a layer or a tile of the neural network.

The sequence of one or more embodiments may be a sequence including information on a feature map, and the sequence may be information related to edge connection between nodes constituting a plurality of layers constituting the neural network. In detail, the data sequence may be information indicating connections or disconnections of a plurality of edges formed in a layer included in the neural network.

Dependency of the sequence of one or more embodiments may be feature map (or tile) data information that is additionally used to process a predetermined feature map (or tile) in a processor. For example, to process the tile 130-1 constituting the input 130 of FIG. 1B, 2 tiles adjacent to the tile 130-1 may be used. Accordingly, the scheduler 209 may schedule 2 tiles adjacent to the tile 130-1 by considering the dependency. Although the example provided above describes that dependency occurs between adjacent tiles, the example is not limited thereto, and tiles that are not adjacent to each other may have dependency.

As illustrated, the processor 205 may be connected to the external memory 215. The external memory 215 may be implemented as cache level having a higher level for the processor 205. However, the external memory 215 may be disposed on the same die as the processor 205. The external memory 215 may be implemented as DRAM. The processor 205 may be connected to the external memory 215 through a memory controller. The external memory 215 may store weights for nodes of the neural network, wherein the nodes may not be currently used. The external memory 215 may be or include a non-transitory computer-readable storage medium storing instructions that, when executed by the processor 205, configure the processor 205 to perform any one, any combination, or all of operations and methods of the processor 205 described herein.

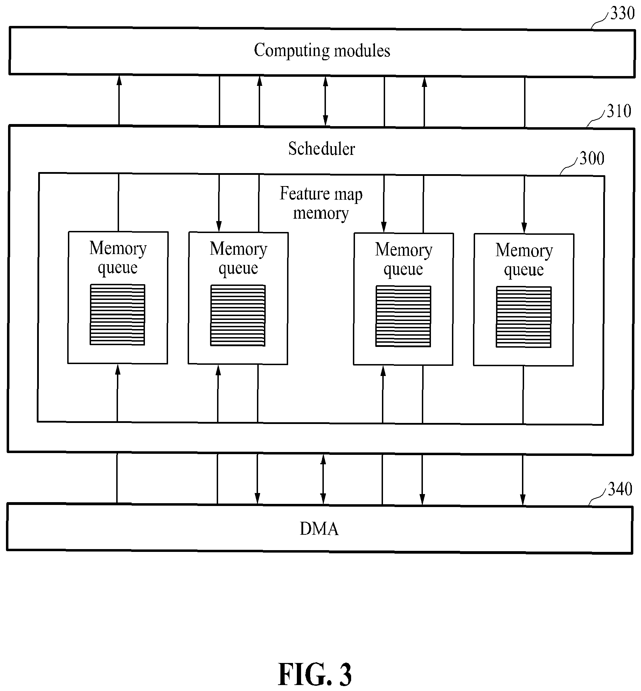

FIG. 3 illustrates an example of an operation of a feature map memory. The description provided with reference to FIGS. 1A to 2 may be identically applicable to FIG. 3 and a duplicated description may be omitted.

Referring to FIG. 3, a feature map memory 300 of one or more embodiments may include a plurality of memory queues and may be connected to a scheduler 310 and computing modules 330. The scheduler 310 may be referred to as a feature map scheduler.

The feature map memory 300 may be a buffer pool, may be constituted by a buffer queue in the unit of tiles, and may use a tile as a sliding window. Each bank of the feature map memory 300 may contain convolutional layer information for an input tile. In this case, the bank may store an input in the unit of tiles and the bank may be a physical unit or a logical unit. When access to the unit of tiles occurs, a status register for each bank may exist and the status register may assist the scheduler 310 to track the feature map memory.

The memory queue may be a set of banks and may be separated based on the depth (or a layer) of the neural network. Data that is read from an external memory (e.g., the external memory 215 of FIG. 2) may be stored in a first memory queue and as the layer deepens, the data may be processed and stored in a subsequent memory queue. The memory queue may receive a command determined by the scheduler 310 from the feature map memory 300 and may function as a queue. Alternatively, the memory queue may exist in an integrated state or a separate state regardless of the depth of the neural network. However, even if in this case, the memory queue may be still a set of banks containing tiles.

The scheduler 310 may have data on tile information in the feature map memory 300 and may determine a subsequent operation to be performed by the computing modules 330. The scheduler 310 may transmit a command to perform an operation based on memory queue data (e.g., a tile) to the computing modules 330, may determine which tile is to be stored, deleted, or transmitted to a direct memory access (DMA) 340, for the feature map memory 300, and may control the computing modules 330, the feature map memory 300, and the DMA 340 based on the determination.

The computing modules 330 may receive, from the scheduler 310, information on whether to perform on operation (e.g., a convolution operation) based on which tile of which memory queue. Each of the computing modules 330 may perform an operation after reading data (e.g., a tile) by selecting a memory queue determined from the received command and an operation result may be stored in a memory queue of a next level.

The DMA 340 may determine a start/end address through a tile number and a feature map base address of the neural network and may read or write data (e.g., a tile) in the external memory in an optimal way. In addition, the DMA 340 may include at least two channels for reading and writing data in the feature map memory 300.

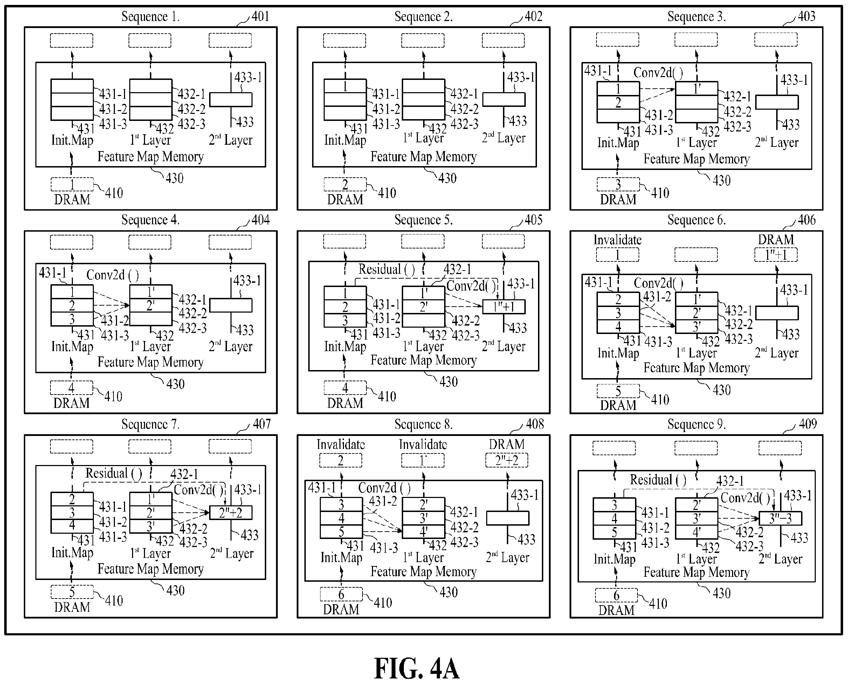

When an operation sequence is not determined by considering dependency between tiles in the scheduler 310, each tile may be processed in the order of layers of the neural network. For example, in a typical method, when all layer operations are completed for a first tile, all layer operations may be performed for a second tile and this may be repeated sequentially for all tiles. In contrast, when using the scheduler 310 of one or more embodiments, an operation may be efficiently processed because an operation may be performed starting from a determined portion for each layer of the neural network. A detailed example of an operation through the scheduler 310 is described with reference to FIG. 4A.

FIG. 4A illustrates an example of a tiling method through a scheduler. The description provided with reference to FIGS. 1A to 3 may be identically applicable to FIG. 4A and a duplicated description may be omitted.

Referring to FIG. 4A, a scheduler (e.g., the scheduler 310 of FIG. 3) of one or more embodiments may priorly process an operation of a tile and tiles having dependency rather than processing an operation for one tile in the order of layers of the neural network. Sequences 1 to 9 of FIG. 4A may be determined by the scheduler, and the scheduler may determine the sequences 1 to 9 based on dependency between tiles.

In a sequence 1 401, a first tile 1 may be read from an external memory (e.g., DRAM) 410. In a sequence 2 402, the scheduler may store the first tile in a first bank 431-1 of a first memory queue 431 of a feature map memory 430 (e.g., the feature map memory 300 of FIG. 3) and may read a second tile 2 from the external memory 410. In a sequence 3 403, the scheduler may store the second tile in a second bank 431-2 of the first memory queue 431 of the feature map memory 430, may read a third tile 3 from the external memory 410, and the computing module may perform a convolution operation on the first tile and a convolution operation result 1' of the first tile may be stored in a first bank 432-1 of a second memory queue 432. However, when performing the convolution operation on the first tile, when information on an area of the second tile overlapping with the first tile is to be used to perform the convolution operation on the first tile, the computing module may use data (e.g., an entirety or a portion of second tile data) of the second tile when performing the convolution operation on the first tile.

In a sequence 4 404, the scheduler may store the third tile in a third bank 431-3 of the first memory queue 431 of the feature map memory 430, may read a fourth tile 4 from the external memory 410, and the computing module may perform a convolution operation on the second tile and a convolution operation result 2' of the second tile may be stored in a second bank 432-2 of the second memory queue 432. Similarly, when performing the convolution operation on the second tile, when information on an area of the first tile and the third tile overlapping with the second tile is to be used to perform the convolution operation on the second tile, the computing module may use data of the first tile and the third tile when performing the convolution operation on the second tile.

In a sequence 5 405, the computing module may perform a convolution operation on a tile 1' stored in the first bank 432-1 of the second memory queue 432, may perform a residual connection operation between an operation result 1" thereof and the first tile 1 stored in the first bank 431-1 of the first memory queue 431, and the residual connection operation result 1"+1 may be stored in a first bank 433-1 of a third memory queue 433.

In a sequence 6 406, the scheduler may remove the first tile from the first memory queue 431, may sequentially move the second tile to the first bank 431-1 of the first memory queue 431 and the third tile to the second bank 431-2 of the first memory queue 431, may store the fourth tile in the third bank 431-3 of the first memory queue 431 of the feature map memory, may read a fifth tile 5 from the external memory 410, and the computing module may perform a convolution operation on the third tile and a convolution operation result 3' of the third tile may be stored in the third bank 432-3 of the second memory queue 432. Similarly, when performing the convolution operation on the third tile, when information on an area of the second tile and the fourth tile overlapping with the third tile may be is to be used to perform the convolution operation on the third tile, the computing module may use data of the second tile and the fourth tile when performing the convolution operation on the third tile. Furthermore, the scheduler may export a residual operation result 1"+1 stored in the third memory queue 433 to the external memory 410.

In a sequence 7 407, the computing module may perform a convolution operation on a tile 2' stored in the second bank 432-2 of the second memory queue 432, may perform a residual connection operation between an operation result 2" thereof and the second tile 2 stored in the first bank 431-1 of the first memory queue 431, and the residual connection operation result 2"+2 may be stored in the first bank 433-1 of the third memory queue 433.

In a sequence 8 408, the scheduler may remove the second tile from the first memory queue 431, may sequentially move the third tile to the first bank 431-1 of the first memory queue 431 and the fourth tile to the second bank 431-2 of the first memory queue 431, may store the fifth tile in the third bank 431-3 of the first memory queue 431 of the feature map memory, and may read a sixth tile 6 from the external memory 410. The scheduler may remove the convolution operation result 1' on the first tile from the second memory queue 432, may sequentially move the convolution operation result 2' on the second tile to the first bank 432-1 of the second memory queue 432 and the convolution operation result 3' on the third tile to the second bank 432-2 of the second memory queue 432, the computing module may perform a convolution operation on the fourth tile and a convolution operation result 4' on the fourth tile may be stored in the third bank 432-3 of the second memory queue 432. The scheduler may export a residual operation result 2"+2 stored in the third memory queue 433 to the external memory 410.

In a sequence 9 409, the computing module may perform a convolution operation on a tile 3' stored in the second bank 432-2 of the second memory queue 432, may perform a residual connection operation between an operation result 3" thereof and the third tile 3 stored in the first bank 431-1 of the first memory queue 431, and the residual connection operation result 3"+3 may be stored in the first bank 433-1 of the third memory queue 433.

Although FIG. 4A illustrates the example of sequences 1 to 9, an NN engine (e.g., the NN engine 200 of FIG. 2) may perform an operation on all sequences of the neural network in the same manner.

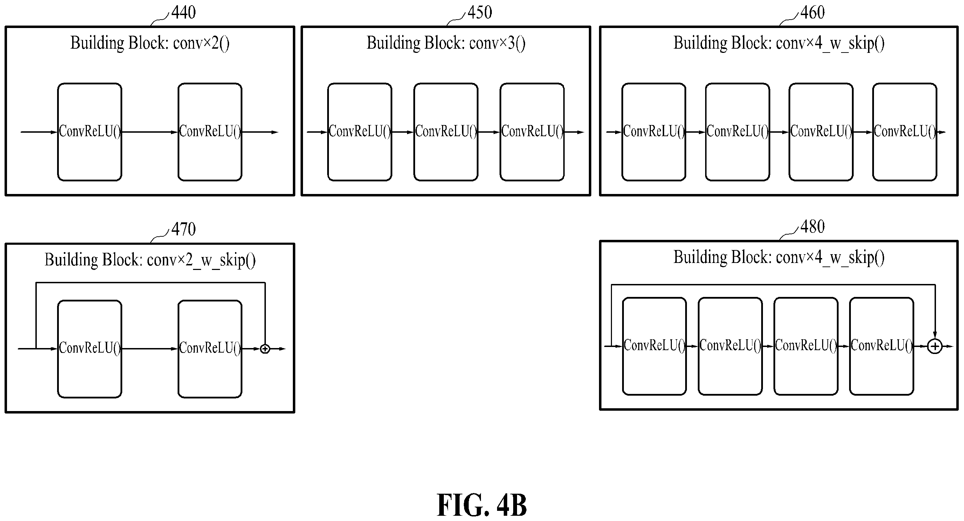

FIG. 4B illustrates an example of a neural network operation. Referring to FIG. 4B, an NN engine (e.g., the NN engine 200 of FIG. 2) of one or more embodiments may perform a neural network operation using various building blocks.

For example, a building block 440 may include 2 convolution operations, a building block 450 may include 3 convolution operations, a building block 460 may include 4 convolution operations, a building block 470 may include 2 convolution operations and a residual connection operation, and a building block 480 may include 4 convolution operations and a residual connection operation. However, the number and type of building blocks of one or more embodiments is not limited to the example of FIG. 4B and the NN engine may perform a neural network operation using various building blocks.

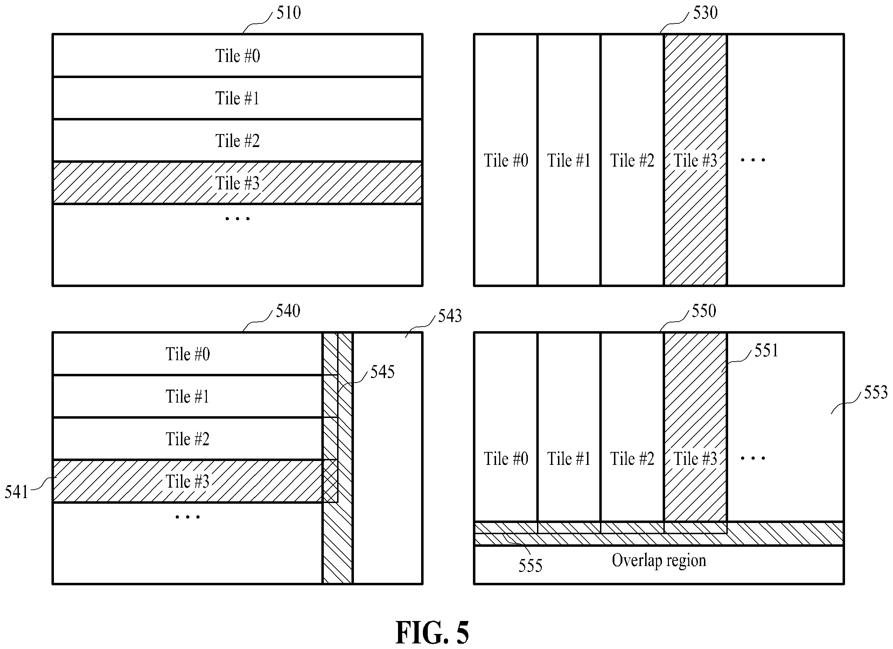

FIG. 5 illustrates an example of a tiling method. The description provided with reference to FIGS. 1A to 4B may be identically applicable to FIG. 5 and a duplicated description may be omitted.

A scheduler (e.g., the scheduler 310 of FIG. 3) may determine a tiling method based on a bit size of a bank constituting a feature map memory, a bit size of a feature map, and/or a feature of the feature map. As described above, a bank may store an input in the unit of tiles. When a bit size of a bank is less than or equal to a bit size of a feature map, a bit size of a tile may be set to be equal to the bit size of the feature map. The bit size of the tile may include a bit width or a bit height according to one embodiment.

For example, in a first case 510, a bit size of a tile may be the same as a bit width of a feature map and the feature map may be divided in a first direction (e.g., the horizontal direction) and in a second case 530, a bit size of a tile may be the same as a bit height of a feature map and the feature map may be divided in a second direction (e.g., the vertical direction).

When the bit size of the bank is greater than the bit size of the feature map, a partial overlap region may occur. For example, a third case 540 and a fourth case 550 may be cases in which an overlap region occurs. In the third case 540, a feature map may be divided in the first direction (e.g., the horizontal direction), however, when the bit size of the bank is greater than the bit width of the feature map, an overlap region 545 may occur between a tile area 541 divided in the first direction and remaining tiles 543. In the fourth case 550, the feature map may be divided in the second direction (e.g., the vertical direction), and when the bit size of the bank is greater than the bit height of the feature map, an overlap region 555 may occur between a tile area 551 divided in the second direction and remaining tiles 553. The computing module may perform an operation on a feature map divided in different directions through a transpose option. Hereinafter, the overlap region may be referred to as a shared boundary area.

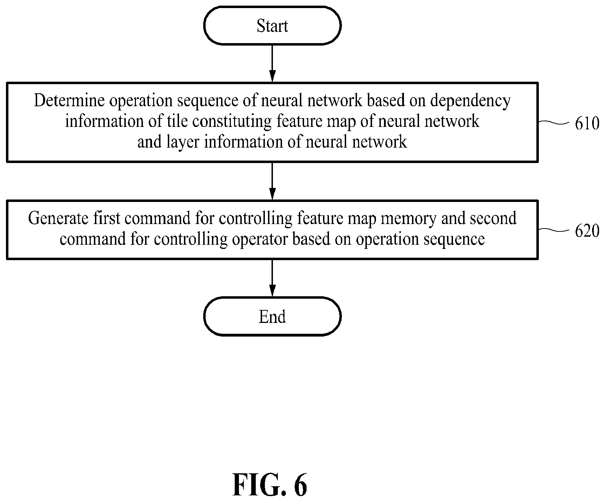

FIG. 6 illustrating an example of a scheduling method. The description provided with reference to FIGS. 1A to 5 may be identically applicable to FIG. 6. For ease of description, it is described that operations 610 to 630 are performed using the scheduler 310 of FIG. 3. However, operations 610 to 630 may be performed by another suitable electronic device in any suitable system.

Furthermore, the operations of FIG. 6 may be performed in the shown order and manner. However, the order of some operations may be changed or omitted without departing from the scope of the shown example. The operations shown in FIG. 6 may be performed in parallel or simultaneously.

In operation 610, the scheduler 310 may determine an operation sequence based on dependency information of a tile constituting a feature map of a neural network and layer information of the neural network.

In operation 620, the scheduler 310 may generate a first command for controlling a feature map memory and a second command for controlling an operator based on the operation sequence. The first command may include information on a tile input to each of a plurality of memory queues constituting the feature map memory. The second command may include information on a tile included in a memory queue that is a target of the operation among the plurality of memory queues for the operator.

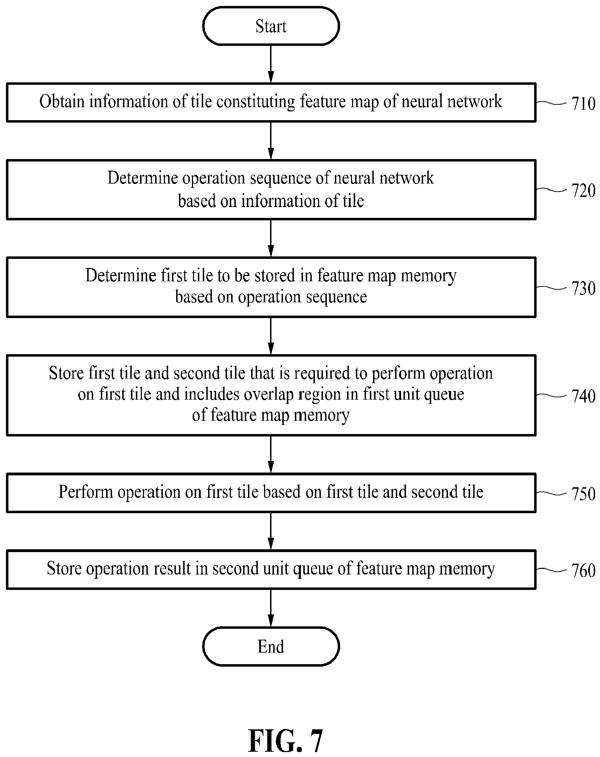

FIG. 7 illustrates an example of a neural network operation method. The description provided with reference to FIGS. 1A to 6 may be identically applicable to FIG. 7. For ease of description, it is described that operations 710 to 760 are performed using the NN engine 200 of FIG. 2. However, operations 710 to 760 may be performed by another suitable electronic device in any suitable system.

Furthermore, the operations of FIG. 7 may be performed in the shown order and manner. However, the order of some operations may be changed, or some operations may be omitted, without departing from the scope of the shown example. The operations illustrated in FIG. 7 may be performed in parallel or simultaneously.

In operation 710, the NN engine 200 may obtain information on a tile constituting a feature map of a neural network. In operation 720, the NN engine 200 may determine an operation sequence of the neural network based on the information of the tile and in operation 730, the NN engine 200 may determine a first tile to be stored in a feature map memory based on the operation sequence.

In operation 740, the NN engine 200 may store a first tile and a second tile including an overlap region in a first memory queue of the feature map memory, wherein the second tile is used to perform an operation of the first tile. In operation 750, the NN engine 200 may perform an operation on the first tile based on the first tile and the second tile. In operation 760, an operation result may be stored in a second memory queue of the feature map memory.

The NN engines, processors, computing modules, schedulers, internal memories, external memories, feature map memories, DMAs, first, second, and third memory queues, first, second, and third banks, NN engine 200, processor 205, computing modules 208, scheduler 209, internal memory 210, external memory 215, feature map memory 300, scheduler 310, computing modules 330, DMA 340, external memory 410, feature map memory 430, first, second, and third memory queues 431, 432, and 433, first, second, and third banks 431-1, 431-2, and 431-3, first, second, and third banks 432-1, 432-2, and 432-3, first bank 433-1, and other apparatuses, devices, units, modules, and components disclosed and described herein with respect to FIGS. 1-7 are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-7 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is also inclusive of the claims and their equivalents, i.e., all variations within the scope of the claims and their equivalents are to be construed as being included in the disclosure.

## Claims

1. A processor-implemented method comprising:
determining an operation sequence of a neural network based on dependency information of a tile constituting a feature map of the neural network and layer information of the neural network; and
generating a first command for controlling a feature map memory and a second command for controlling an operator based on the operation sequence,
wherein the first command comprises information on a tile input to each of a plurality of memory queues constituting the feature map memory.

2. The method of claim 1, wherein the dependency information of the tile comprises information on another tile that is used to perform an operation on a predetermined tile and comprises an overlap region.

3. The method of claim 1 or 2, wherein the second command comprises information on a tile comprised in a memory queue that is a target of an operation among the plurality of memory queues for the operator.

4. The method of any of the previous claims, wherein the memory queues are separated and constituted based on a layer of the neural network.

5. The method of any of the previous claims, wherein each of the plurality of memory queues is constituted in a plurality of memory banks stored in a unit of tiles.

6. The method of any of the previous claims, wherein a tile constituting the feature map of the neural network is generated by dividing the feature map in a single direction.

7. The method of any of the previous claims in combination with claim 5, wherein, in response to a bit width in a first direction of the feature map being greater than a bit width of the memory bank, a bit width of the tile is determined based on the bit width of the memory bank.

8. The method of any of the previous claims, wherein the feature map memory comprises static random access memory (SRAM).

9. A non-transitory computer-readable storage medium storing instructions that, when executed by one or more processors, configure the one or more processors to perform the method of any of the previous claims.

10. An apparatus comprising:
a memory;
an operator; and
a scheduler configured to:
determine an operation sequence of a neural network based on dependency information of a tile constituting a feature map of the neural network and layer information of the neural network; and
generate a first command for controlling the memory and a second command for controlling the operator based on the operation sequence,
wherein the first command comprises information on a tile input to each of a plurality of memory queues constituting the memory.

11. The apparatus of claim 10, wherein the dependency information of the tile comprises information on another tile that is used to perform an operation on a predetermined tile and comprises an overlap region.

12. The apparatus of claim 10 or 11, wherein the second command comprises information on a first tile comprised in a first memory queue that is a target of an operation among the plurality of memory queues for the operator, wherein preferably the operator is configured to generate a second tile by processing the first tile based on the second command, and the memory is configured to store the second tile in a second memory queue.

13. The apparatus of any of claims 10 - 12, wherein the memory queues are separated and constituted based on a layer of the neural network; and/or wherein a tile constituting the feature map of the neural network is generated by dividing the feature map in a single direction.

14. The apparatus of any of claims 10 - 13, wherein each of the plurality of memory queues is constituted in a plurality of memory banks stored in a unit of tiles.

15. The apparatus of claim 14, wherein, in response to a bit width in a first direction of the feature map being greater than a bit width of the memory bank, a bit width of the tile is determined based on the bit width of the memory bank.
